# EUROPÄISCHE PATENTSCHRIFT

(11) **EP 0 935 143 B1**
(45) Veröffentlichungstag und Bekanntmachung des Hinweises auf die Patenterteilung: **12.04.2006**
(21) Anmeldenummer: 99100846.7
(22) Anmeldetag: 19.01.1999
(51) Int. Cl.: G01S 13/10, G01S 7/28

(54) **Abstandsmessverfahren mit adaptiver Verstärkung**
Method for range measurement with adaptive amplification
Méthode de télémètrie avec amplification adaptative

(30) Priorität: 07.02.1998 DE 19804957
(43) Veröffentlichungstag der Anmeldung: 11.08.1999
(73) Patentinhaber: Valeo Schalter und Sensoren GmbH, 74321 Bietigheim-Bissingen (DE)
(72) Erfinder: Philipps, Werner Dr., 71638 Ludwigsburg (DE); Osterfeld, Martin Dr., 74321 Bietigheim-Bissingen (DE); Grabmaier, Anton Dr., 74321 Bietigheim-Bissingen (DE); Brandt, Timo, 74172 Neckarsulm (DE); Benz, Jürgen, 74354 Besigheim (DE)
(74) Vertreter: Dreiss, Fuhlendorf, Steimle & Becker

(56) Entgegenhaltungen:
- WO-A-88/05922
- DE-C- 3 713 708

## Beschreibung

Die Erfindung betrifft ein Verfahren bzw. eine Vorrichtung mit den Merkmalen des Oberbegriffs des Anspruches 1 bzw. Anspruches 10.

In vielen Bereichen der Technik müssen Abstände ermittelt werden. In der Kraftfahrzeugtechnik ist es beispielsweise bereits bekannt, Abstandsmesssysteme zur Unterstützung des Fahrers beim Ein- und Ausparken einzusetzen. Diese Systeme basieren derzeit zumeist auf dem Ultraschall-Prinzip, wobei die Sensorköpfe je nach Ausstattung in der hinteren oder in beiden Stossstangen integriert sind. Ferner sind bereits Abstandsmesssysteme vorgeschlagen worden, die es dem Fahrer ermöglichen, während der Fahrt den Abstand zum voraus fahrenden Fahrzeug zu überwachen. Diese Abstandsmesssysteme müssen wesentlich größere Abstände messen können als die zuvor angesprochenen Einparkhilfen.

Aus der WO-A-88 05 922 ist ein Verfahren und eine Vorrichtung zur Entfernungsmessung durch Verarbeitung optischer Impulssignale, wobei vom Sender Impulsgruppen ausgesendet werden und die empfangene Signalfolge mit einer von der Sendeimpulsrate abhängigen Abtastfrequenz abgetastet und digitalisiert wird und Werte aufaddiert werden und aus dem resultierenden Signal die Entfernung abgeleitet wird. Da sich bei Fahrzeugen der Nahbereich und der Fernbereich oft in schneller Folge abwechseln ist dieses bekannte Verfahren bei Fahrzeugen nicht sehr geeignet.

Aus "Introduction to Radar Systems", 2. Auflage, Merill I. Skolnik, McGraw-Hill, 1984, S. 382 bis 385 ist die Anwendung eines sog. logarithmischen Detektors bekannt, um Eingangssignale mit einem hohem Dynamikbereich zu verarbeiten.

Aus "Handbuch Radar und Radarsignalverarbeitung", Albrecht Ludloff, Vieweg verlag, 1993, S. 2-14 bis 2.16 ist eine automatische Verstärkungsregelung (automatic gain control, AGC) für Radarsignale bekannt.

Eine Aufgabe der vorliegenden Erfindung besteht darin, ein Verfahren und eine Vorrichtung anzugeben zur Erzeugung von Benutzerinformation, welche einem Kraftfahrzeugbenutzer die situationsangepasste Beurteilung einer Hindernisstruktur unter Berücksichtigung wenigstens zweier bezüglich verschiedener Abstandssensoren ermittelter Abstandswerte ermöglicht.

Die vorstehend genannte Aufgabe wird nach jeweils einem Verfahren bzw. einer Vorrichtung gemäss den Merkmalen der Ansprüche 1 und 10 gelöst.

Bei einer Variante des erfindungsgemäßen Verfahrens umfassen die Fahrtinformationsdaten zweckmässigerweise zumindest Lenkwinkeldaten und Fahrtgeschwindigkeitsdaten.

Nach einer weiteren vorteilhaften Ausgestaltung dieses Verfahrens werden die Objektinformationsdaten vor oder bei der Weiterverarbeitung durch die zweite Programmroutine einer Plausibilitätsprüfung unterzogen. Beispielsweise kann die Plausibilitätsprüfung darin bestehen, dass Objektinformationsdaten, die plötzlich auftauchenden oder auch plötzlich verschwindenden Hindernissen entsprechen, verworfen werden, da in der Realität solche Situationen nicht vorkommen können. Durch diese Massnahme lässt sich die Sicherheit des Verfahrens im praktischen Betrieb weiter erhöhen.

Gemäss einer weiteren vorteilhaften Modifikation umfasst die zweite Programmroutine eine Bewertungsroutine, die anhand der Objektinformationsdaten und der Fahrtinformationsdaten die Gefahrenrelevanz eines erfassten Hindernisses bewertet, wobei ein warnsignal ausgegeben wird, wenn der ermittelte Gefahrenrelevanzwert einen vorbestimmten Referenzwert überschreitet. Auf diese weise können zuvor definierte, besonders schwerwiegende Gefahrensituationen dem Benutzer durch Abgabe des Warnsignals erkennbar gemacht werden.

Durch die adaptive Regelung der Signalverstärkung in Abhängigkeit von der Pegelhöhe des Ausgangssignals und/oder in Abhängigkeit von dem Signalwert eines von der Auswerteschaltung bereitgestellten Verstärkungsbefehlssignals bei einer weiteren Erfindungsvariante wird der dynamische Ausgangsspannungsbereich des Verstärkers optimal an die Übertragungskennlinie des nachgeschalteten Analog/Digital-Umsetzers angepasst. Dadurch wird der Quantisierungsfehler, der beim Umsetzen des verstärkten analogen Signals in eine Zahl mit endlich vielen Bits infolge der systembedingt begrenzten Auflösung des Analog/Digital-Umsetzers unweigerlich entsteht, minimiert. Dies ermöglicht einerseits, bei kleinen Abständen eine hohe Messgenauigkeit zu erreichen und andererseits, das Verfahren auch zur Messung von großen Abständen einzusetzen.

Dies lässt sich folgendermaßen verstehen. Die reflektierte Welle weist eine Amplitudenhöhe auf, die sowohl von der Entfernung des Objektes als auch von der Art des Objektes, beispielsweise dessen räumlicher Ausdehnung, Reflexivität usw., abhängig ist. Bei der Messung von kleinen Abständen bzw. großen Objekten weist die reflektierte Welle in der Regel sehr hohe Amplitudenwerte auf. Das von dem Empfängerabgegebene analoge Ausgangssignal zeigt dann ebenfalls einen sehr hohen Pegelwert. Würde dieser Pegelwert von einem Verstärker mit konstanter, d.h. pegelunabhängiger Verstärkung verstärkt werden, würde dies einen Analog/Digital-Umsetzer erforderlich machen, der den verstärkten, hohen Pegelwert noch umsetzen könnte. Ein solcher Analog/Digital-Umsetzer müsste folglich über einen sehr breiten Dynamikbereich verfügen. Weil aber das Quantisierungsrauschen eines Analog/Digital-Umsetzers bei konstanter Auflösung (N-Bit-Umsetzer, N = konstant) mit wachsendem Dynamikbereich ansteigt, müsste in diesem Fall eine geringe Messgenauigkeit in Kauf genommen werden. Alternativ wäre es möglich, einen Analog/Digital-Umsetzer mit höherer Auflösung (M-Bit-Umsetzer, M > N) einzusetzen, wodurch sich die Messgenauigkeit zwar erhöhen ließe, die Bauteilkosten jedoch anwachsen. Durch die mit der vorliegenden Erfindung gefundene adaptive Verstärkung des Ausgangssignals kann bei einem hohen Amplitudenwert der reflektierten Welle eine geeignete, geringe Verstärkung durch den Verstärker bewirkt werden, wodurch ein Analog/Digital-Umsetzer mit begrenztem Dynamikbereich und somit (bei fester Auflösung) erhöhter Signalempfindlichkeit eingesetzt werden kann. Das erfindungsgemäße Verfahren ermöglicht somit eine Abstandsmessung mit hoher Empfindlichkeit, wie sie bei in Kraftfahrzeugen eingesetzten Abstandsmesssystemen vor allem im Nahbereich benötigt wird.

Andererseits sind bei der Messungen von großen Abständen verhältnismäßig kleine Amplituden der reflektierten Welle zu erwarten. Die erfindungsgemäße adaptive Verstärkung bewirkt in diesem Fall eine vergleichsweise starke Signalverstärkung und verhindert dadurch, dass das verstärkte Signal unter die Nachweisschwelle des Analog/Digital-Umsetzers abfällt. Folglich können auch große Abstände sicher gemessen werden, d.h. es wird ein großer Messbereich erhalten.

Nach einer bevorzugten Ausgestaltung des erfindungsgemäßen Verfahrens ist das Eingangssignal ein Pulssignal und die Abstandsbestimmung erfolgt nach einem Pulslaufzeitverfahren. Ein solches Verfahren ist insbesondere bei der Verwendung eines Radarsensors als Abstandssensor geeignet. Bei Verwendung eines Pulslaufzeitverfahrens charakterisiert sich ein vorteilhaftes Abstandsermittlungsverfahren dadurch, dass der Signalwert des Verstärkungsbefehlssignals nach Auftreten eines Pulses in dem Eingangssignal bis zum Auftreten des nächsten Pulses in dem Eingangssignal jeweils ansteigt. Dadurch wird ermöglicht, dass von fernliegenden Objekten reflektierte, später eintreffende Wellen mit einer höheren Verstärkung verstärkt werden und somit der Messbereich zu größeren Abständen hin vergrößert werden kann.

Bei Einsatz eines Pulslaufzeitverfahrens ist es ferner vorteilhaft, wenn die Zeitspanne zwischen dem Auftreten zweier Pulse in einer Aufeinanderfolge von Zeitfenstern unterteilt ist und jedem Zeitfenster ein vorgegebener Signalwert des Verstärkungsbefehlssignals zugeordnet ist. Während sich durch Vorgabe der einzelnen Signalwerte zu den Zeitfenstern der Messbereich beeinflussen lässt, kann durch Vorgabe der Zeitdauern der einzelnen Zeitfenster zwischen zwei Pulsen die Messgenauigkeit bestimmt werden. Da bei größeren Abständen eine geringere Messgenauigkeit als bei kleinen Abständen ausreichend ist, wird die Zeitdauer eines später auftretenden Zeitfensters vorzugsweise grösser als die Zeitdauer eines früher auftretenden Zeitfensters zwischen zwei Pulsen gewählt.

Das vorstehend beschriebene Abstandsmessverfahren ist aufgrund seines großen Messbereichs in besonderem Masse zum Einsatz in dem erfindungsgemäßen Verfahren zur Erzeugung von Benutzerinformation, durch welches ein Kraftfahrzeugbenutzer bei einer situationsangepassten Verhaltensweise im Strassenverkehr unterstützt wird, geeignet.

Bei einem solchen Verfahren umfassen die Fahrtinformationsdaten zweckmäßigerweise zumindest Lenkwinkeldaten und Fahrtgeschwindigkeitsdaten.

Nach einer vorteilhaften Ausgestaltung dieses Verfahrens werden die Objektinformationsdaten vor oder bei der Weiterverarbeitung durch die zweite Programmroutine einer Plausibilitätsprüfung unterzogen. Beispielsweise kann die Plausibilitätsprüfung darin bestehen, daß Objektinformationsdaten, die plötzlich auftauchenden oder auch plötzlich verschwindenden Hindernissen entsprechen, verworfen werden, da in der Realität solche Situationen nicht vorkommen können. Durch diese Maßnahme läßt sich die Sicherheit des Verfahrens im praktischen Betrieb weiter erhöhen.

Gemäß einer weiteren vorteilhaften Modifikation umfaßt die zweite Programmroutine eine Bewertungsroutine, die anhand der Objektinformationsdaten und der Fahrtinformationsdaten die Gefahrenrelevanz eines erfaßten Hindernisses bewertet, wobei ein Warnsignal ausgegeben wird, wenn der ermittelte Gefahrenrelevanzwert einen vorbestimmten Referenzwert überschreitet. Auf diese Weise können zuvor definierte, besonders schwerwiegende Gefahrensituationen dem Benutzer durch Abgabe des Warnsignals erkennbar gemacht werden.

Die zweite Aufgabe der Erfindung wird durch eine Vorrichtung gemäß dem Kennzeichen des Anspruchs 10 gelöst. Dabei wird durch das Vorsehen eines Verstärkers mit adaptiver Signalverstärkung die Verwendung eines in der Anschaffung kostengünstigen Analog/Digital-Umsetzers ermöglicht, weil ein hochauflösender Analog/Digital-Umsetzer wie bereits beschrieben nicht erforderlich ist.

Wenn der Verstärker in dem sensor integriert ist, ermöglicht dies die Bereitstellung eines niederohmigen Ausgangssignals, wodurch in vorteilhafter Weise eine größere Unempfindlichkeit der Vorrichtung gegenüber Störungen bei der Übertragung entlang längerer Leitungswege erzielt wird.

Eine besonders einfache Ausführung des Verstärkers mit adaptiver Signalverstärkung kennzeichnet sich dadurch, daß der Verstärker aus einem eingangsseitig vorgesehenen Logarithmierer und einer nachgeschalteten Verstärkerstufe mit konstanter Verstärkung gebildet ist.

In alternativer Weise kann dem Verstärker jedoch auch ein Pegelhöhendetektor vorgeschaltet sein, der die Pegelhöhe des Ausgangssignals detektiert und ein Pegelhöhensignal bereitstellt, das einem Regeleingang für die Signalverstärkung des Verstärkers zugeführt wird.

Weitere bevorzugte Ausgestaltungen der vorliegenden Erfindung sind in den Unteransprüchen angegeben.

Die Erfindung wird nachfolgend in beispielhafter Weise anhand der Zeichnung näher beschrieben. In dieser zeigt:
- Fig. 1: eine Prinzipdarstellung eines Systems zur Umfeldwahrnehmung mit mehreren Abstandssensoren, wie es in einem Kraftfahrzeug verwendet wird;
- Fig. 2: ein schematisches Blockschaltbild der in Fig. 1 gezeigten Auswerteschaltung bezüglich eines einzelnen Abstandssensors;
- Fig. 3: eine Modifikation der in Fig. 2 gezeigten Schaltung; und
- Fig. 4: eine Darstellung zur Erläuterung des Verfahrens zur Erzeugung von Benutzerinformation für den Kraftfahrzeugbenutzer.

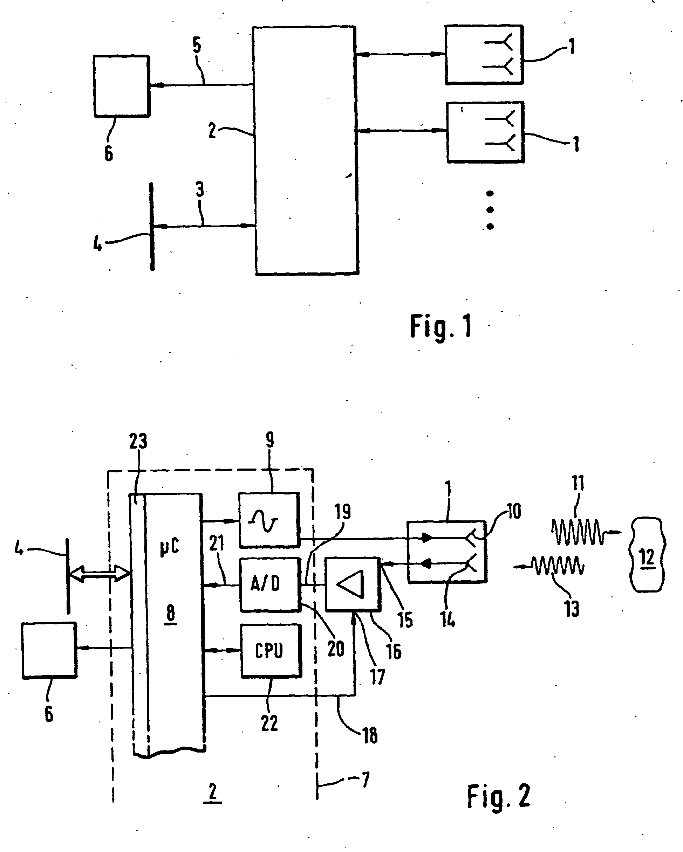

Nach Fig. 1 besteht ein System zur Umfeldwahrnehmung aus einer Vielzahl von vorzugsweise in den Stoßfängern integrierten Radarsensoren 1, die mit einer Auswerteschaltung 2 in bidirektionaler Leitungsverbindung stehen. Die Auswerteschaltung 2 steht über eine Leitungsverbindung 3 mit einem Bussystem 4 des Kraftfahrzeugs in Verbindung, und eine Datenausgabeleitung 5 der Auswerteschaltung 2 übermittelt audiovisuelle Informationsdaten an eine Ausgabeeinheit 6, die in nicht dargestellter Weise zumindest über ein Display und einen Lautsprecher verfügt.

Fig. 2 zeigt ein Blockschaltbild des Schaltungsaufbaus der Auswerteschaltung 2 bezüglich eines einzelnen Radar-Abstandssensors 1. Die gestrichelte Linie 7 faßt dabei die die Auswerteschaltung 2 bildenden Schaltkreiselemente zusammen.

Die Auswerteschaltung 2 weist einen von einem Mikrocontroller 8 angesteuerten Pulsgenerator 9 auf, der in regelmäßiger Folge sinusförmige Strompulssignale erzeugt und diese einem Radarsender 10 des Radar-Abstandssensors 1 zuleitet. Gleichzeitig wird ein in Fig. 2 nicht dargestellter Zähler angestoßen. Der Radarsender 10 sendet bei jedem einkommenden Strompuls ein elektromagnetisches Wellenpaket 11 aus, das sich in einer definierten Richtung von dem Kraftfahrzeug weg ausbreitet. Die Frequenz des Wellenpaketes liegt im Mikro- oder Millimeterwellenbereich. Trifft das Wellenpaket 11 wie in Fig. 2 dargestellt auf ein Objekt 12, wird es - je nach Größe und Material des Objektes 12 - mehr oder weniger stark reflektiert. Das reflektierte Wellenpaket ist in Fig. 2 mit dem Bezugszeichen 13 gekennzeichnet und wird von einem Empfänger 14 des Radar-Abstandssensors 1 erfaßt. Dabei ist die Gesamtlaufzeit der Wellenpakete 11 und 13 proportional zu dem Abstand zwischen Radar-Abstandssensor 1 und Objekt 12.

Der Empfänger 14 wandelt das Wellenpaket 13 in ein im wesentlichen Sinusform aufweisendes Ausgangssignal 15 um. Die Amplitude des Ausgangssignals ist abhängig von der Amplitude des einlaufenden Wellenpakets 13 und hängt somit ebenfalls empfindlich von der Entfernung, der Größe und der Reflexivität des Objekts 12 ab. Das Ausgangssignal 15 wird einem Verstärker 16 zugeführt, der einen Eingang 17 aufweist, über den die Verstärkung des Verstärkers 16 einstellbar ist. Der Eingang 17 steht über eine Steuerleitung 18 mit dem Mikrocontroller 8 in Verbindung und wird mit einem von diesem ausgegebenen, im folgenden noch näher erläuterten Verstärkungsbefehlssignal beaufschlagt.

Das verstärkte Signal 19 wird einem N-Bit-Analog/Digital-Umsetzer zugeführt und von diesem fortlaufend in eine Binärzahl umgesetzt. Der dabei unvermeidlich entstehende Quantisierungsfehler ist um so geringer, je größer die Auflösung N des Umsetzers gewählt ist und je kleiner die maximale Eingangsspannung des Umsetzers bei sinusförmiger Vollaussteuerung, d.h. der dynamische Bereich des Umsetzers ist. Das vom Analog/Digital-Umsetzer 20 erzeugte digitale Signal 21 wird dem Mikrocontroller 8 zugeführt.

Mit Eintreffen des digitalen Signals 21 am Mikrocontroller 8 wird der nicht dargestellte Zähler angehalten und der Zählwert wird einem Mikroprozessor 22 zugeführt. Der Mikroprozessor 22 berechnet aus dem Zählwert den Abstand zwischen dem Radar-Abstandssensor 1 und dem Objekt 12 und gibt diesen an den Mikrocontroller 8 zurück. Die Ausgabe des Abstandswertes an die Ausgabeeinheit 6 erfolgt dann über eine Schnittstelle 23 des Mikrocontrollers.

Die Verstärkungsregelung durch das Verstärkungsbefehlssignal erfolgt auf die folgende Weise: Unmittelbar nach der Aussendung eines auslaufenden Wellenpakets 11 wird zunächst eine sehr geringe Verstärkung eingestellt. Sollte kurz danach bereits ein einlaufendes Wellenpaket 13 registriert werden, so muß das reflektierende Objekt im unmittelbaren Nahbereich des Radar-Abstandssensors 1 angeordnet sein. Durch die geringe Verstärkung wird die in diesem Fall zu erwartende hohe Signalamplitude kompensiert und somit ermöglicht, daß ein kostengünstiger Analog/Digital-Umsetzer mit begrenztem Dynamikbereich eingesetzt werden kann. Mit fortdauerndem Zeitablauf wird die Verstärkung des Verstärkers 16 dann erhöht, so daß auch für große Entfernungen eine Signalamplitude erreicht wird, die nicht im Quantisierungsrauschen untergeht. Dies vergrößert den Abstandsmeßbereich des Systems ohne hierfür den Einsatz eines hochauflösenderen M-Bit-Analog/Digital-Umsetzers mit M > N erforderlich zu machen.

Das Verstärkungsbefehlssignal kann so gewählt sein, daß zwischen zwei Pulsen eine stetig ansteigende Verstärkung im Verstärker 16 bewirkt wird. Andererseits ist es auch möglich, die Zeitspanne zwischen zwei Pulsen in eine Abfolge von Zeitfenstern zu unterteilen und jedem dieser Zeitfenster einen bestimmten Verstärkungswert zuzuordnen. Der Anstieg der Verstärkung erfolgt dann in diskretisierter Weise beim Übergang von einem Zeitfenster zum nächsten.

Entsprechend der Darstellung nach Fig. 1 können an dem Mikrocontroller 8 weitere Radar-Abstandssensoren angeschlossen und von diesem in gleicher Weise gesteuert sein.

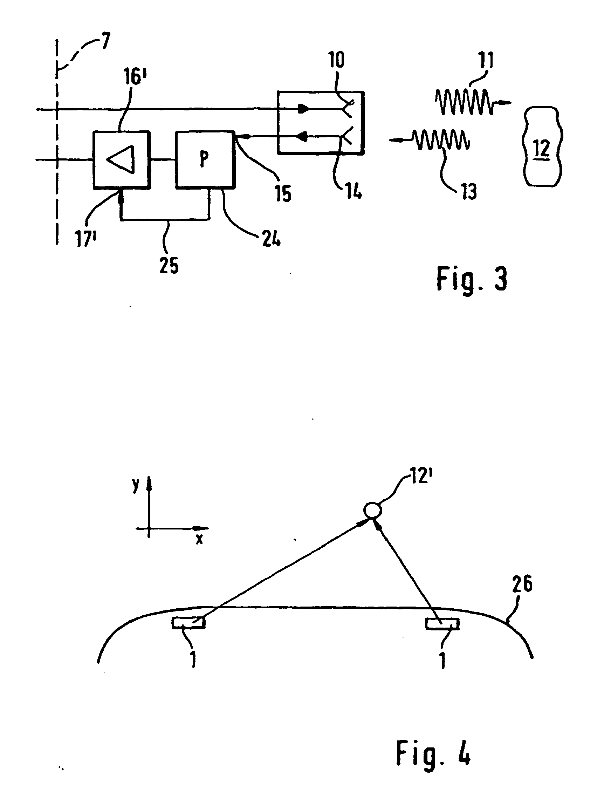

Fig. 3 zeigt eine alternative Möglichkeit zur adaptiven verstärkungseinstellung gemäß der vorliegenden Erfindung. Dabei stellt die gestrichelte Linie 7 wiederum die Systemgrenze der Auswerteschaltung 2 dar.

Die Schaltung nach Fig. 3 unterscheidet sich dahingehend von dem in Fig. 2 dargestellten Aufbau, daß dem Ausgang des Radarempfängers 14 ein Pegelhöhendetektor 24 nachgeschaltet ist. Der Pegelhöhendetektor 24 ermittelt die Amplitudenhöhe des Ausgangssignals 15 und ist über eine Leitung 25 in Gegenkopplung mit dem Verstärkungsregeleingang 17' des Verstärkers 16' verbunden. Die Gegenkopplungsregelung erfolgt dabei in der Weise, daß eine um so kleinere Verstärkung bewirkt wird, je größer der von dem Pegeldetektor 24 bestimmte Signalpegel ist.

Eine Abwandlung der in Fig. 3 gezeigten Anordnung besteht darin, daß der von dem Pegelhöhendetektor 24 ermittelte Pegelwert dem Mikroprozessor 8 zur Verfügung gestellt wird, worauf dieser ähnlich wie in Fig. 2 die Verstärkung des Verstärkers 16 über die Ausgabe eines geeigneten Verstärksingsbefehlssignals einstellt.

Eine besonders einfache adaptive Verstärkungsregelung ergibt sich, wenn der Verstärker aus einer Verstärkerstufe mit konstanter Verstärkung und einem dem Verstärker vorgeschalteten Logarithmierer besteht.

Die in Fig. 2 und 3 gezeigten Ausführungsbeispiele haben gemeinsam, daß der Eingang des Analog/Digital-Umsetzers unabhängig von dem Ausgangssignal 15 des Sensors stets bestmöglich ausgesteuert wird. Der Analog/Digital-Umsetzer 20 kann dabei auch in dem Mikrocontroller 8 integriert sein.

Die in Fig. 3 gezeigte Schaltungsanordnung kann auch dann eingesetzt werden, wenn die Entfernungsbestimmung nicht auf einem Laufzeitverfahren beruht.

Anhand von Fig. 4 wird unter Bezugnahme auf die vorhergehenden Figuren 1 bis 3 ein Verfahren zur Erzeugung von Benutzerinformation erläutert, mit dem einem Kraftfahrzeugbenutzer die situationsangepaßte Beurteilung einer Hindernisstruktur ermöglicht wird. Fig. 4 zeigt die vordere oder auch hintere Stoßstange 26 eines nicht näher dargestellten Kraftfahrzeugs, in die zwei Abstandssensoren integriert sind. Bei den Abstandssensoren kann es sich um beliebige Sensortypen handeln, wobei dem hier gezeigten Beispiel Abstandssensoren 1 zugrundegelegt werden, die nach dem Radar-Prinzip arbeiten. Die Abstandssensoren 1 tasten jeweils einen horizontal-(x-Richtung) und vertikal-(y-Richtung) räumlich ausgedehnten Umgebungsbereich ab und erfassen dabei ein Objekt 12'. Die jeweiligen Abstandswerte werden gemäß der vorhergehenden Beschreibung bei jeder Abtastung ermittelt und stehen somit der Auswerteschaltung 2 zur Verfügung. Gleichzeitig werden über das Bussystem 4 fahrsituationsrelevante Daten, wie beispielsweise der momentane Lenkwinkel und die momentane Fahrzeuggeschwindigkeit, von dem Mikrocontroller 8 angefordert. Sowohl die fortlaufend ermittelten Abstandswerte als auch die Fahrtinformationsdaten werden dem Mikroprozessor 22 zur Verfügung gestellt und von diesem in der folgenden Weise verarbeitet.

Nach einer ersten Programmroutine ermittelt der Mikroprozessor 22 aus den gemessenen Abstandswerten fortlaufend die Lagen des oder der detektierten Objekte 12' sowie bei räumlich ausgedehnten Objekten auch Angaben hinsichtlich der Objektaußenform. Durch Verwendung einer Vielzahl von Abstandssensoren 1 hinter, vor und gegebenenfalls auch seitlich von dem Kraftfahrzeug wird auf diese Weise ein der Realität nachgebildetes Hindernisszenario berechnet und ständig aktualisiert.

Die erste Programmroutine zur Ermittlung des Hindernisszenarios umfaßt Algorithmen wie beispielsweise eine digitale Filterung, eine Mittelwertbildung mehrerer Datensätze, eine Korrelation, Fourier-Analyse usw..

Die Auswertung des aktuellen Hindernisszenarios in bezug auf die konkrete Fahrtsituation erfolgt in einem weiteren Schritt unter Berücksichtigung der ebenfalls ständig aktualisierten Fahrtinformationsdaten. Ein solche Bewertung ist deshalb erforderlich, weil ein bestimmtes Hindernisszenario je nach konkreter Fahrsituation für den Fahrer eine völlig unterschiedliche Gefahrenrelevanz haben kann. In dieser zweiten Stufe wird daher beispielsweise aus den Lenkwinkeldaten eine vorausgesagte Bewegungstrajektorie des Kraftfahrzeugs berechnet und diese unter Berücksichtigung der Geschwindigkeitsinformationsdaten mit dem zuvor berechneten Hindernisszenario in Beziehung gesetzt. Beispielsweise kann auf diese Weise ermittelt werden, ob das Fahrzeug bei konstant gehaltener Geschwindigkeit und unverändertem Lenkwinkel beim Einparken ein Hindernis streifen wird oder nicht. Diese Information wird dem Fahrer als Benutzerinformation über die Ausgabeeinheit 6 als visuelle Information oder als Audioinformation mitgeteilt.

Ferner kann die in der zweiten Stufe berechnete Benutzerinformation auch zur ständigen Überwachung der Fahrt in bezug auf vordefinierte Gefahrensituationen herangezogen werden. In diesem Fall wird die Benutzerinformation dem Fahrer nur dann weitergegeben, wenn eine konkrete Gefahrensituation eintritt. Dies wird dadurch erreicht, daß der Mikroprozessor 22 im Rahmen der zweiten Rechenroutine ständig einen Gefahrenrelevanzwert berechnet und diesen mit einem vorbestimmten Referenzwert vergleicht. Überschreitet der Gefahrenrelevanzwert den vorbestimmten Referenzwert, wird dies dem Fahrer durch ein akustisches oder optisches Warnsignal mitgeteilt.

Beispielsweise wird durch die Abstandssensoren 1 während einer normalen Fahrt ständig der Abstand zum voraus fahrenden Fahrzeug bestimmt. Die Geschwindigkeitsdaten werden dann durch die gemessenen Abstandsdaten numerisch geteilt oder nach einer anderen geeigneten Beziehung in Verbindung gesetzt. Der dabei erhaltene Wert ist der Gefahrenrelevanzwert und wird mit einem zuvor eingegebenen Referenzwert, der eine kritische Grenze für zu dichtes Auffahren darstellt, verglichen. Bei zu dichtem Auffahren bzw. zu hoher Geschwindigkeit erfolgt dann die Warnung.

Neben den bereits angesprochenen Einsatzbereichen als Parkhilfe und Abstandsüberwachungssystem ist das erfindungsgemäße Verfahren aufgrund seiner geschilderten Vorzüge auch zur Warnung bei einem vom Fahrer übersehenen Hindernis ("Blind Spot Detection"), zum frühzeitigen Erkennen eines Unfalls ("Pre Chrash Detection") und als Fahrthilfe beim Kolonnenverkehr ("Stop and Go Distance Measurement") einsetzbar.

### Bezugszeichenliste

- 1: Radar-Abstandssensor
- 2: Auswerteschaltung
- 3: Leitungsverbindung
- 4: Bussystem
- 5: Datenausgabeleitung
- 6: Ausgabeeinheit
- 7: gestrichelte Linie
- 8: Microcontroller
- 9: Pulsgenerator
- 10: Radarsender
- 11: auslaufendes Wellenpaket
- 12, 12': Objekt
- 13: einlaufendes Wellenpaket
- 14: Radarempfänger
- 15: Ausgangssignal
- 16, 16': Verstärker
- 17, 17': Eingang
- 18: Steuerleitung
- 19: verstärktes Signal
- 20: Analog/Digital-Umsetzer
- 21: digitales Signal
- 22: Mikroprozessor
- 23: Schnittstelle
- 24: Pegelhöhendetektor
- 25: Leitung
- 26: Stoßstange

## Patentansprüche

1. Verfahren zur Erzeugung von Benutzerinformation, welche einem Kraftfahrzeugbenutzer die situationsangepasste Beurteilung einer Hindernisstruktur (12') unter Berücksichtigung wenigstens zweier bezüglich verschiedener Abstandssensoren (1) ermittelter Abstandswerte ermöglicht, **dadurch gekennzeichnet, dass** die beiden ermittelten Abstandswerte fortlaufend einer Recheneinheit (22) zugeführt werden, die Recheneinheit (22) aus den beiden Abstandswerten gemäss einer ersten Programmroutine Objektinformationsdaten über die räumliche Lage und/oder Form eines Hindernisses (12') ermittelt und gemäss einer zweiten Programmroutine diese Objektinformationsdaten unter Berücksichtigung von Fahrtinformationsdaten, welche für den aktuellen Fahrzustand des Kraftfahrzeugs charakteristisch sind, in Benutzerinformationsdaten weiterverarbeitet, und dass die Benutzerinformationsdaten dem Kraftfahrzeugbenutzer ausgegeben werden.

2. Verfahren nach Anspruch 1, **dadurch gekennzeichnet, dass** die Fahrtinformationsdaten zumindest Lenkwinkeldaten und Fahrtgeschwindigkeitsdaten enthalten.

3. Verfahren nach einem der vorhergehenden Ansprüche, **dadurch gekennzeichnet, dass** die Objektinformationsdaten vor oder bei der Weiterverarbeitung durch die zweite Programmroutine einer Plausibilitätsprüfung unterzogen werden.

4. Verfahren nach einem der vorhergehenden Ansprüche, **dadurch gekennzeichnet, dass** die zweite Programmroutine eine Bewertungsroutine umfasst, die anhand der Objektinformationsdaten und der Fahrtinformationsdaten die Gefahrenrelevanz eines erfassten Hindernisses (12') bewertet, und dass ein Warnsignal ausgegeben wird, wenn der ermittelte Gefahrenrelevanzwert einen vorbestimmten Referenzwert überschreitet.

5. Verfahren nach einem der vorstehenden Ansprüche, wobei zur Ermittlung der Abstandswerte einem Sender (10) des Abstandssensors (1) ein analoges Eingangssignal zugeführt wird, der Sender (10) eine Welle (11) ausstrahlt, die an dem Objekt (12, 12') reflektiert wird,
ein Empfänger (14) des Abstandssensors (1) die reflektierte Welle (13) empfängt und daraufhin ein analoges Ausgangssignal (15) abgibt, dessen Pegel von der Entfernung und/oder der Art des Objektes abhängig ist, das Ausgangssignal (15) von einem nachgeschalteten Verstärker (16, 16') verstärkt wird,
das verstärkte Signal (19) einem Analog/Digital-Umsetzer (20) zugeführt und von diesem in ein digitales Signal (21) umgesetzt wird, und
das digitale Signal (21) zur Berechnung eines Abstandswertes einer Auswerteschaltung (2) zugeführt wird, und wobei die Signalverstärkung des Verstärkers (16, 16') adaptiv in Abhängigkeit von der Pegelhöhe des Ausgangssignals (15) und/oder in Abhängigkeit von dem Signalwert eines von der Auswerteschaltung (2) bereitgestellten Verstärkungsbefehlssignals, der für einen erwarteten Abstandsbereich charakteristisch ist, geregelt wird.

6. Verfahren nach Anspruch 5, **dadurch gekennzeichnet, dass** das Eingangssignal ein Pulssignal ist und die Abstandsbestimmung nach einem Pulslaufzeitverfahren erfolgt.

7. Verfahren nach Anspruch 5 oder 6, **dadurch gekennzeichnet, dass** der Signalwert des Verstärkungsbefehlssignals (18) nach Auftreten eines Pulses in dem Eingangssignal bis zum Auftreten des nächsten Pulses in dem Eingangssignal jeweils ansteigt.

8. Verfahren nach Anspruch 7, **dadurch gekennzeichnet, dass** die Zeitspanne zwischen dem Auftreten zweier Pulse in eine Aufeinanderfolge von Zeitfenstern unterteilt ist und jedem Zeitfenster ein vorgegebener Signalwert des Verstärkungsbefehlssignals zugeordnet ist.

9. Verfahren nach Anspruch 8, **dadurch gekennzeichnet, dass** die Zeitfenster zwischen zwei Pulsen eine variable Zeitdauer aufweisen, wobei die Zeitdauer eines später auftretenden Zeitfensters grösser als die Zeitdauer eines früher auftretenden Zeitfensters ist.

10. Vorrichtung zur Erzeugung von Benutzerinformation, welche einem Kraftfahrzeugbenutzer die situationsangepasste Beurteilung einer Hindernisstruktur (12') unter Berücksichtigung wenigstens zweier bezüglich verschiedener Abstandssensoren (1) ermittelter Abstandswerte ermöglicht, **gekennzeichnet durch** eine Recheneinheit (22), die aus den beiden ermittelten und ihr fortlaufend zugeführten Abstandswerten gemäss einer ersten Programmroutine Objektinformationsdaten über die räumliche Lage und/oder Form eines Hindernisses (12') ermittelt, und die gemäss einer zweiten Programmroutine diese Objektinformationsdaten unter Berücksichtigung von Fahrtinformationsdaten, welche für den aktuellen Fahrzustand des Kraftfahrzeugs charakteristisch sind, in Benutzerinformationsdaten weiterverarbeitet, wobei die Benutzerinformationsdaten dem Kraftfahrzeugbenutzer ausgebbar sind.

11. Vorrichtung nach Anspruch 10, **dadurch gekennzeichnet, dass** die Vorrichtung zur Ausführung des Verfahrens nach einem der Ansprüche 1 bis 9 geeignet ist.

## Revendications

1. Procédé pour générer de l'information utilisateur, qui permet à un utilisateur de véhicule de faire une évaluation adaptée à la situation d'une structure d'obstacle (12') en prenant en compte au moins deux capteurs de distance (1) différents, **caractérisé en ce que** les deux valeurs de distance déterminées sont amenées en permanence à une unité de calcul (22), l'unité de calcul (22) détermine à partir des deux valeurs de distance selon une première routine de programme des données d'information d'objet sur la position dans l'espace et/ou sur la forme d'un obstacle (12') et traite ultérieurement selon une seconde routine de programme ces données d'information sur l'objet compte tenu des données d'information de conduite, qui sont caractéristiques de l'état de conduite actuel du véhicule, dans des données d'information utilisateur, et **en ce que** les données d'information utilisateur sont envoyées à l'utilisateur du véhicule.

2. Procédé selon la revendication 1, **caractérisé en ce que** les données d'information de conduite contiennent au moins des données d'angle de braquage et des données de vitesse de conduite.

3. Procédé selon l'une quelconque des revendications précédentes, **caractérisé en ce que** les données d'information sur l'objet sont soumises avant le traitement ultérieur ou lors de ce traitement par la seconde routine de programme à un contrôle de vraisemblance.

4. Procédé selon l'une quelconque des revendications précédentes, **caractérisé en ce que** la seconde routine de programme comprend une routine d'évaluation qui évalue l'importance de risque d'un obstacle (12') enregistré à l'aide des données d'information sur l'objet et des données d'information de conduite et **en ce qu'**un signal d'avertissement est envoyé lorsque la valeur d'importance de risque calculée dépasse une valeur de référence prédéfinie.

5. Procédé selon l'une quelconque des revendications précédentes, un signal d'entrée analogique étant amené à un émetteur (10) du capteur de distance (1) pour le calcul des valeurs de distance, l'émetteur (10) émettant une onde (11) qui est réfléchie sur l'objet (12, 12'), un émetteur (14) du capteur de distance (1) recevant l'onde (13) réfléchie et envoyant ensuite un signal de sortie (15) analogique, dont le niveau est dépendant de la distance et/ou de la nature de l'objet, le signal de sortie (15) étant amplifié par un amplificateur (16, 16') monté en aval, le signal (19) amplifié étant amené à un convertisseur analogique/numérique (20) et étant converti par celui-ci en un signal (21) numérique, et le signal (21) numérique étant amené à un circuit d'analyse (2) pour le calcul d'une valeur de distance et l'amplification du signal de l'amplificateur (16, 16') étant réglée de façon adaptative en fonction du niveau du signal de sortie (15) et/ou en fonction de la valeur du signal d'un signal d'instruction d'amplification fourni par le circuit d'analyse (2), qui est caractéristique d'une plage de distance escomptée.

6. Procédé selon la revendication 5, **caractérisé en ce que** le signal d'entrée est un signal d'impulsion et le calcul de la distance s'effectue selon un procédé avec le temps de propagation d'impulsion.

7. Procédé selon la revendication 5 ou 6, **caractérisé en ce que** la valeur du signal d'instruction d'amplification (18) croît après l'apparition d'une impulsion dans le signal d'entrée jusqu'à l'apparition de l'impulsion suivante dans le signal d'entrée.

8. Procédé selon la revendication 7, **caractérisé en ce que** le laps de temps s'écoulant entre l'apparition de secondes impulsions est subdivisé en une succession de fenêtres de temps et une valeur de signal prédéfinie du signal d'instruction d'amplification est attribuée à chaque fenêtre de temps.

9. Procédé selon la revendication 8, **caractérisé en ce que** les fenêtres de temps présentent en une durée variable entre deux impulsions, la durée d'une fenêtre de temps apparaissant plus tard étant supérieure à la durée d'une fenêtre de temps apparaissant plus tôt.

10. Dispositif pour générer de l'information utilisateur, qui permet à un utilisateur de voiture de faire l'évaluation adaptée à la situation d'une structure d'obstacle (12') en tenant compte d'au moins deux valeurs de distance calculées au moyen de différents capteurs de distance (1), **caractérisé par** une unité de calcul (22), qui détermine à partir des deux valeurs de distance, qui sont calculées et lui sont amenées en permanence, selon une première routine de programme, des données d'information sur l'objet sur la position dans l'espace et/ou la forme d'un obstacle (12'), et qui retraite selon une seconde routine de programme ces données d'information sur l'objet en tenant compte des données d'information de conduite, qui sont caractéristiques de l'état de conduite actuel du véhicule, en données d'information utilisateur, les données d'information utilisateur pouvant être sorties pour l'utilisateur du véhicule.

11. Dispositif selon la revendication 10, **caractérisé en ce que** le dispositif convient pour la mise en oeuvre du procédé selon l'une quelconque des revendications 1 à 9.

## Claims

1. A process for generating of user information which enables a user of a vehicle the evaluation of a structure (12') of an obstacle adapted to a situation under consideration of at least two determined distance values of different distance sensors, **characterized in that** the detected distance values are submitted to a microcomputer (22),
the microcomputer (22) detects according to a first program routine object information data on the areal position and/or the type of the object of an obstacle (12') and according to a second program routine these object information data are further processed in user information data under consideration of driving information data, that are characteristic of the actual driving condition of the vehicle, and that the user information data are given to the vehicle driver.

2. The process, according to claim 1, **characterized in that** the driving information data contain at least steering angle data and driving speed data.

3. The process, according to one of the preceding claims, **characterized in that** the object information data are subjected before or during further processing by the second program routine to a plausibility test.

4. The process, according to one of the preceding claims, **characterized in that** the second program routine comprises an evaluation routine that evaluates the danger likelihood of a detected obstacle (12'), and **in that** a warning signal is emitted when the detected danger likelihood value exceeds a predetermined reference value.

5. The process, according to one of the preceding claims, wherein for determining the distance value an analog input signal is directed to a transmitter (10) of the distance sensor (1), the transmitter (10) emits a wave (11) that is reflected by the object (12, 12'),
a receiver (14) of the distance sensor (1) receives the reflected wave (13) and thereupon emits an analog output signal (15) whose level depends on the distance and/or the type of the object,
the output signal (15) is amplified by a subsequently added amplifier (16, 16'), the amplified signal (19) is directed to an analog/digital converter (20) and is converted by same into a digital signal (21), and
the digital signal (21) for computing a distance value is directed to an evaluation circuit (2), and wherein by the steps of controlling the signal amplification of the amplifier (16, 16') in an adaptive manner depending on one of the level of the output signal (15) and the signal value of an amplification command signal made available by the evaluation circuit (2), which is characteristic of an expected distance range.

6. The process, according to claim 5, **characterized in that** the input signal is a pulse signal and the distance determination takes place according to a pulse duration process.

7. The process, according to claim 5 or 6, **characterized in that** the signal value of the amplification command signal (18) increases upon each appearance of a pulse in the input signal up to the appearance of the next pulse in the input signal.

8. The process, according to claim 7, **characterized in that** the time span between the occurrence of two pulses is divided into a sequence of time windows and **in that** to each time window, a predetermined signal value of the amplification command signal is assigned.

9. The process, according to claim 8, **characterized in that** the time windows between two pulses have a variable duration, wherein the duration of a time window occurring later is greater than the duration of a time window occurring earlier.

10. A process for producing user information that enables a motor vehicle driver to evaluate an obstacle structure (12) in a manner adapted to the situation while taking into consideration at least two distance values determined with respect to at least two different distance sensors (1), **characterized in** a microcomputer (22) which detects according to a first program routine object information data on the areal position and/or the type of the object of an obstacle (12') and according to a second program routine these object information data are further processed in user information data under consideration of driving information data, that are characteristic of the actual driving condition of the vehicle, and that the user information data are given to the vehicle driver.

11. The device, according to claim 10, **characterized in that** the device is capable for performing the process according to claims 1 to 9.
